# EUROPEAN PATENT APPLICATION

(11) **EP 1 233 566 A1**
(43) Date of publication of application: **21.08.2002**
(21) Application number: 01972557.1
(22) Date of filing: 28.09.2001
(51) Int. Cl.: H04L 5/16, H04J 3/16, H04Q 7/38

(54) **DATA COMMUNICATION DEVICE DATA COMMUNICATION METHOD**

(30) Priority: 29.09.2000 JP 2000299077
(71) Applicant: MATSUSHITA ELECTRIC INDUSTRIAL CO., LTD., Kadoma-shi, Osaka 571-8501 (JP)
(72) Inventor: ISHIKAWA, Kimihiko, Yokohama-shi, Kanagawa 233-0001 (JP)
(74) Representative: Grünecker, Kinkeldey, Stockmair & Schwanhäusser Anwaltssozietät
(86) International application number: JP0108500
(87) International publication number: WO02030034

(57) **Abstract**

A data communication apparatus, which can eliminate delay in transmission of information that responds to receive information from a base station and which can expand the radius of a communication zone of the base station at a mobile station. A base station 100 that comprises the present apparatus allocates a slot 124 for other mobile station between both a downlink slot 122 and an uplink slot 123 for the same mobile station in the same frame at the time of carrying out scheduling that allocates both the downlink slot 122 and the uplink slot 123 to each mobile station in accordance with downkink/uplink traffic loads.

## Description

### Technical Field

The present invention relates to a data communication apparatus mounted on a base station and terminal apparatuses (mobile station, etc.) in a mobile communication system using TDD (Time Division Duplex) and a data communication method.

### Background Art

Conventionally, data communication apparatus and data communication method of this kind are described in Japanese laid-open patent publication No.HEI 8-298688.

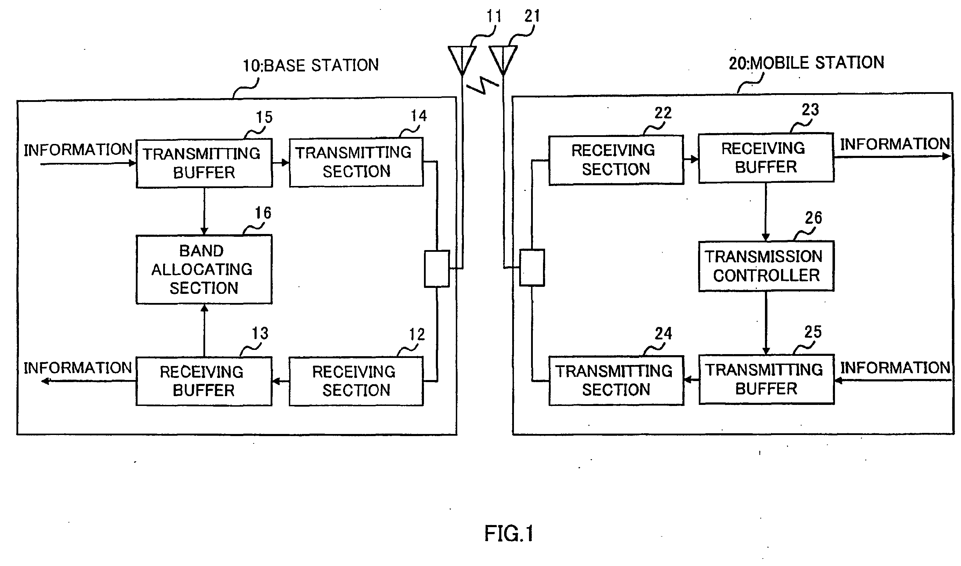

FIG. 1 is a block diagram showing the configurations of a base station and a mobile station in a mobile communication system that performs conventional TDD data communication.

In FIG. 1, a base station 10 comprises an antenna 11 for transmission and reception, a receiving section 12, a receiving buffer 13, a transmitting section 14, a transmitting buffer 15, and a band allocating section 16. Moreover, a mobile station (terminal apparatus) 20 comprises an antenna 21 for transmission and reception, a receiving section 22, a receiving buffer 23, a transmitting section 24, a transmitting buffer 25, and a transmission controller 26.

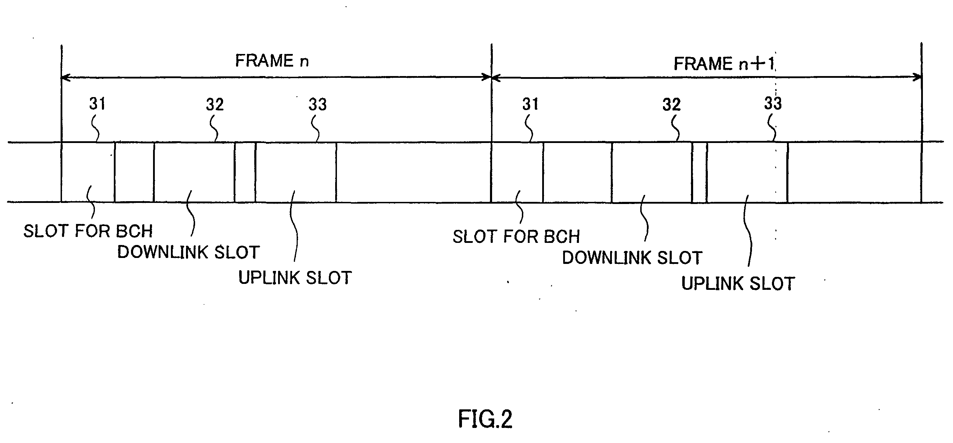

An explanation will be next given of data transmitting and receiving operations using TDD in connection with the above-structured base station 10 and mobile station 20 with reference to a frame configuration view shown in FIG. 2.

The base station 10 notifies the mobile station 20 of slot information relating to the regulations of downlink/uplink slots such as positions, lengths, and modulation methods of a downlink slot 32 and a uplink slot 33 using a slot 31 for BCH(Broadcast CHannel) of a header for each frame based on a scheduling result of the band allocating section 16 that allocates slots (uplink and downlink), namely, a band (time band in the case of TDD communication) to each mobile station 20 in accordance with downlink/uplink traffic loads.

Moreover, information such as user information held in the transmitting buffer 15 is inserted to the downlink slot 32.

Such notification to the mobile station 20 is carried out by radio-transmitting information from the antenna 11 that is subjected to predetermined radio transmit processing such as modulation, upconvert, and the like at the transmitting section 14 .

The mobile station 20 extracts receive information from the downlink slot 32 allocated to the own station (hereinafter referred to as "downlink slot for own station") based on slot information of the header for each frame of a received signal. Then, the mobile station 20 inserts transmit information that reflects the contents of this receive information to the uplink slot 33 allocated to the own station (hereinafter referred to as "uplink slot for own station") similarly, and transmits it to the base station 10.

In other words, information received by the receiving section 22 via the antenna 21 is held in the receiving buffer 23 , and transmit information is inserted to the uplink slot 33 for own station by control of transmission controller 26 in accordance with this held information. Then, predetermined radio transmit processing is provided to information by the transmitting section 24, and information subjected to radio transmit processing is radio-transmitted from the antenna 21.

This transmit information is received by the receiving section 12 via the antenna 11 at the base station 10, thereafter being output to a back stage processing circuit (not shown) via the receiving buffer 13.

However, according to such a conventional apparatus, at each mobile station 20, the contents of receive information of the downlink slot 32 for own station are reflected in transmit information and this transmit information is inserted to the uplink slot 33 for own station in the same frame as that of the downlink slot 32 for own station. For this reason, in the case where a time interval between the downlink slot 32 for own station and the uplink slot 33 for own station, which are allocated by the base station 10, is short, transmit information that reflects the contents of receive information cannot be inserted to the uplink slot 33 for own station in the same frame, so that transmit information must be inserted to the uplink slot 33 for own station in a next frame. This causes a problem in which transmission of transmit information that reflects the contents of receive information is delayed by one frame.

Moreover, in the case where the mobile station 20 is placed at the location away from the base station 10, the downlink slot 32 for own station is received late at the corresponding mobile station 20. For this reason, the corresponding mobile station 20 transmitsthe uplink slot 33 for own station with the downlink slot 32 for own station in the same frame together in one frame, and the uplink slot 33 for own station needs to be transmitted at a quick timing. However, in the case of such transmission at a quick timing, a collision between the downlink slot 32 and the uplink slot 33 for own station occurs, with result that transmission cannot be appropriately carried out. Accordingly, the base station 10 must reduce the radius of communication zone to deal with such a case. Namely, there is a problem in which the radius of a communication zone of the base station 10 is limited small.

### Disclosure of Invention

It is an object of the present invention is to provide a data communication apparatus and a data communication method, which can eliminate delay in transmission of transmit information that reflects the contents of receive information from a base station at a terminal apparatus and which can increase a radius of a communication zone of the base station.

According to one aspect of the present invention, there is provided a data communication apparatus comprising allocating means for allocating both a downlink slot and an uplink slot to each terminal apparatus in accordance with downlink/uplink traffic loads in TDD communication; and control means for controlling the allocating means such that a slot for other terminal apparatus can be allocated between both slots of the downlink slot and the uplink slot that are allocated to the same terminal apparatus in the same frame signal.

According to another aspect o the present invention, there is provided a data communication apparatus comprising allocating means for allocating both a downlink slot and an uplink slot to each terminal apparatus in accordance with downlink/uplink traffic loads in TDD communication; and control means for controlling the allocating means such that guard time can be allocated between both slots of the downlink slot and the uplink slot that are allocated to the same terminal apparatus in the same frame signal.

According to further another aspect of the present invention, there is provided a data communication apparatus comprising allocating means for allocating both a downlink slot and an uplink slot to each terminal apparatus in accordance with downlink/uplink traffic loads in TDD communication; and control means for controlling the allocating means such that a random access slot, which is usable by an arbitrary terminal apparatus, can be allocated between both slots of the downlink slot and the uplink slot that are allocated to the same terminal apparatus in the same frame signal.

According to still further another aspect of the present invention, there is provided a data communication method comprising the step of allocating a slot for other terminal apparatus between both slots of a downlink slot and an uplink slot that are allocated to the same terminal apparatus in the same frame signal when both the downlink slot and the uplink slot are allocated to each terminal apparatus in accordance with downlink/uplink traffic loads in TDD communication.

According to still further another aspect of the present invention, there is provided a data communication method comprising the step of allocating guard time between both slots of a downlink slot and an uplink slot that are allocated to the same terminal apparatus in the same frame signal when both the downlink slot and the uplink slot are allocated to each terminal apparatus in accordance with downlink/uplink traffic loads in TDD communication.

According to still further another aspect of the present invention, there is provided a data communication method comprising the step of allocating a random access slot between both slots of a downlink slot and an uplink slot that are allocated to the same terminal apparatus in the same frame signal when both the downlink slot and the uplink slot are allocated to each terminal apparatus in accordance with downlink/uplink traffic loads in TDD communication.

### Brief Description of Drawings

FIG. 1 is a block diagram showing the configurations of a base station and a mobile station in a mobile communication system that performs conventional TDD data communication;
FIG. 2 is a frame configuration view showing the arrangement of downlink/uplink slots allocated to the mobile station by the base station in the mobile communication system that performs conventional TDD data communication;
FIG. 3 is a block diagram showing the configurations of a base station and a mobile station in a mobile communication system that performs TDD data communication according to Embodiment 1 of the present invention;
FIG.4 is a frame configuration view showing the arrangement of downlink/uplink slots allocated to the mobile station by the base station in the mobile communication system that performs TDD data communication according to Embodiment 1 of the present invention;
FIG. 5 is another frame configuration view showing the arrangement of downlink/uplink slots allocated to the mobile station by the base station in the mobile communication system that performs TDD data communication according to Embodiment 1 of the present invention;
FIG. 6 is a block diagram showing the configuration of a base station in a mobile communication system that performs TDD data communication according to Embodiment 2 of the present invention;
FIG. 7 is a block diagram showing the configuration of a base station in a mobile communication system that performs TDD data communication according to Embodiment 3 of the present invention; and
FIG.8 is a frame configuration view showing the arrangement of downlink/uplink slots allocated to a mobile station by a base station in a mobile communication system that performs TDD data communication according to Embodiment 4 of the present invention.

### Best Mode for Carrying Out the Invention

The following will specifically explain embodiments of the present invention with reference to the drawings accompanying herewith.

### (Embodiment 1)

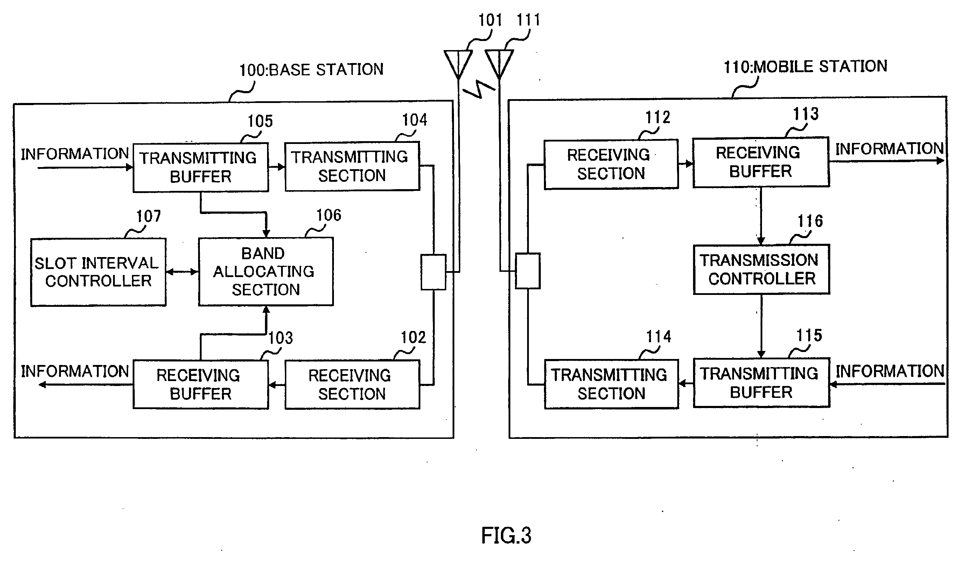

FIG. 3 is a block diagram showing the configurations of a base station and a mobile station in a mobile communication system that performs TDD data communication according to Embodiment 1 of the present invention.

In FIG. 3, a base station 100 comprises an antenna 101 for transmission and reception, a receiving section 102, a receiving buffer 103, a transmitting section 104, a transmitting buffer 105, a band allocating section 106, and a slot interval controller 107. Moreover, a mobile station (terminal apparatus) 110 comprises an antenna 111 for transmission and reception, a receiving section 112, a receiving buffer 113, a transmitting section 114, a transmitting buffer 115, and a transmission controller 116.

In addition, the number of mobile stations 110 that perform TDD data communication with one base station 100 is not particularly limited in the range of the given allowable number, and one or a plurality of mobile stations 110 may be possible. Moreover, the terminal apparatus is not limited to the mobile station 110, and an arbitrary terminal apparatus except the base station may be included.

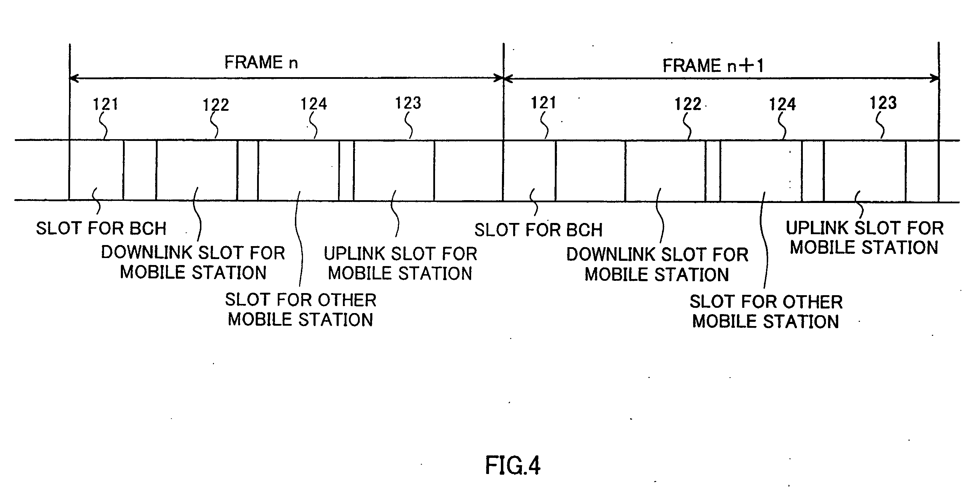

An explanation will be next given of data transmitting and receiving operations using TDD in connection with the above-configured base station 100 and mobile station 110 with reference to the frame configuration view of FIG.4.

The base station 100 notifies the mobile station 110 of slot information relating to the regulations of downlink/uplink slots such as positions, lengths, and modulation methods of downlink slot 122 and uplink slot 123 using a slot 121 for BCH(Broadcast CHannel) of a header for each frame based on a scheduling result of the band allocating section 106 that allocates slots (uplink and downlink), namely, a band (time band in the case of TDD communication) to each mobile station 110 in accordance with downlink/uplink traffic loads.

At the time of scheduling, the band allocating section 106 allocates a slot 124 for other mobile station between both slots of the downlink slot 122 and uplink slot 123 for the same mobile station that are allocated to the same mobile station in the same frame signal in accordance with control of the slot interval controller 107.

Moreover, information such as user information held in the transmitting buffer 105 is inserted to the downlink slot 122.

Such notification to the mobile station 110 is carried out by radio-transmitting information from the antenna 101 that is subjected to predetermined radio transmit processing such as modulation, upconvert, and the like at the transmitting section 104.

The mobile station 110 extracts receive information from the downlink slot for own station 110 based on slot information of the header for each frame of a received signal. Then, the mobile station 110 inserts transmit information that reflects the contents of this receive information to the uplink slot 123 for own station 110 arranged next to the slot 124 for other mobile station, and transmits it to the base station 100.

In other words, information received by the receiving section 112 via the antenna 111 is held in the receiving buffer 113, and transmit information is inserted to the uplink slot 123 for own station 110 by control of transmission controller 116 in accordance with this held information. Then, predetermined radio transmit processing is provided to information by the transmitting section 114, and information subjected to radio transmit processing is radio-transmitted from the antenna 111.

This transmit information is received by the receiving section 102 via the antenna 101 at the base station 100, thereafter being output to a back stage processing circuit (not shown) via the receiving buffer 103.

In this way, according to this embodiment, at the time of carrying out scheduling where the base station 100 allocates both the downlink slot and the uplink slot to each mobile station 110 in accordance with downlink/uplink traffic loads, the slot 124 for other mobile station is allocated between both slots of the downlink slot 122 and the uplink slot 123 for the same mobile station in the same frame. For this reason, since the slot 124 for other mobile station is interposed between both slots of the downlink slot 122 and the uplink slot 123 that are allocated to the same mobile station 110, it is possible to obtain time enough to reflect receive information, which is extracted from the downlink slot 122 for own station, in transmit information by slot 124 for other mobile station even if the distance between the slots is narrowed like the conventional case. This makes it possible for the mobile station 110, having the downlink slot 122 and the uplink slot 123 for own station allocated thereto, to reflect the contents of receive information, which is extracted from the downlink slot 122 for own station, in transmit information and to insert it to the uplink slot 123 for own station in the same frame without fail. In other words, this eliminates delay in transmission of transmit information that reflects the contents of receive information from the base station at the mobile station.

Moreover, according to this embodiment, it is possible to increase the radius of a communication zone of the base station. Namely, in the case where the mobile station 110 is placed at the location away from the base station 100 as mentioned above, the downlink slot 122 for own station is received late at the corresponding mobile station 110, so that the corresponding mobile station 110 transmits the uplink slot 123 placed in the same frame as that of the downlink slot 122 for own station at a quick timing. In this case, a collision between the downlink slot and the uplink slot for own station occurs, with result that transmission cannot be appropriately carried out in the conventional case. However, according to this embodiment, since the slot 124 for other mobile station is interposed between both slots of the downlink slot 122 and the uplink slot 123 for the same mobile station in the same frame, such a collision can be avoided. This makes it possible for the base station 100 to increase the radius of communication zone.

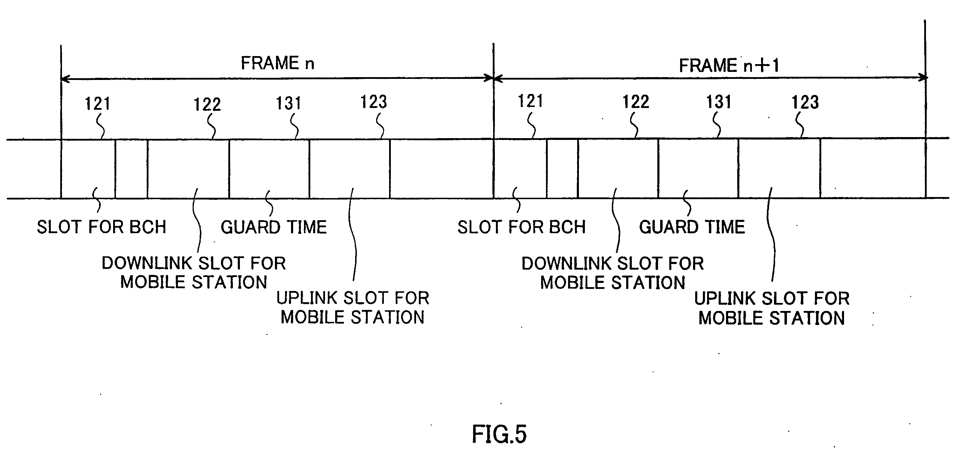

Additionally, as a modification of this embodiment, the slot interval controller 107 can carry out control that allocates guard time 131 between both slots of the downlink slot 122 and the uplink slot 123 for the same mobile station in place of the slot 124 for other mobile station, as illustrated in FIG. 5. Moreover, in the case where no other mobile station exist, the slot interval controller 107 can carry out control that allocates guard time 131 between both slots of the downlink slot 122 and the uplink slot 123 for the same mobile station in place of the slot 124 for other mobile station, as illustrated in FIG. 5.

This can obtain the same effect as the case in which the slot 124 for other mobile station is allocated. In other words, since guard time 131 is interposed between both slots of the downlink slot 122 and the uplink slot 123 for the same mobile station, it is possible to obtain time enough to reflect receive information, which is extracted from the downlink slot 122 for own station, in transmit information, by use of guard time 131 even if the distance between the slots is narrowed like the conventional case. This makes it possible for the mobile station 110 to reflect the contents of receive information, which is extracted from the downlink slot 122 for own station, in transmit information and to insert it to the uplink slot 123 for own station in the same frame without fail. This can eliminate delay in transmission of transmit information that reflects the contents of receive information from the base station at the mobile station. Moreover, even in the case where the mobile station 110 is placed at the location away from the base station 100, guard 131 is interposed between both slots of the downlink slot 122 and the uplink slot 123 for own station in the same frame. Accordingly, it is possible to avoid occurrence in the collision between the downlink slot for own station and the uplink slot as in the conventional case. It is also possible to increase the radius of communication zone of the base station.

At this time, the slot interval controller 107 can set the length of guard time 131 to a fixed value. In this case, since the length of guard time 131 can be set to the fixed value, processing for controlling guard time 131 can be reduced correspondingly and processing loads on the base station 100 can be decreased.

### (Embodiment 2)

Embodiment 2 shows another control mode in connection with the modification of Embodiment 1 (in a case in which guard time 131 is allocated).

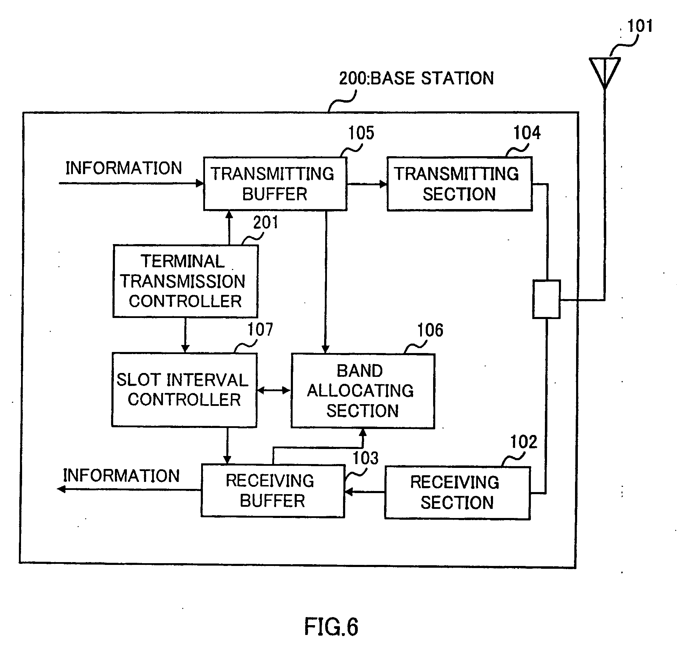

FIG. 6 is a block diagram showing the configuration of a base station in a mobile communication system that performs TDD data communication according to Embodiment 2 of the present invention. In addition, some sections in Embodiment 2 illustrated in FIG. 6 are assigned the same symbols as those of corresponding sections in Embodiment 1 illustrated in FIG. 3 and its explanation is omitted.

A base station 200 shown in FIG. 6 is configured to have a terminal transmission controller 201 that is connected between the transmitting buffer 105 and the slot interval controller 107 in addition to the configuration components of base station 100 shown in FIG. 3.

When detecting that information to be transmitted to the mobile station 110 is information in which receive contents do not have to be reflected in transmit information in the same frame at the mobile station 110, the terminal transmission controller 201 controls such that guard time 131 (FIG. 5) is not be allocated between both slots of the downlink slot 122 and the uplink slot 123 for the same mobile station.

In this way, according to this embodiment, when receive contents need not to be reflected in transmit information in the same frame at the mobile station 110, guard time 131 is not be allocated between both slots of the downlink slot 122 and the uplink slot 123 for the mobile station 110. This makes it possible to use the frame efficiently.

### (Embodiment 3)

Embodiment 3 shows further another control mode in connection with the modification of Embodiment 1 (in a case in which guard time 131 is allocated).

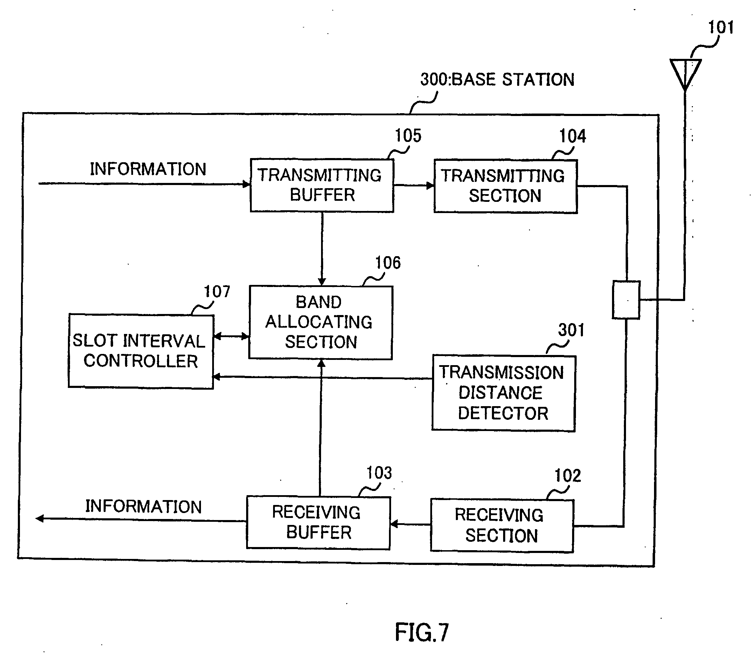

FIG. 7 is a block diagram showing the configuration of a base station in a mobile communication system that performs TDD data communication according to Embodiment 3 of the present invention. In addition, some sections in Embodiment 3 illustrated in FIG. 7 are assigned the same symbols as those of corresponding sections in Embodiment 1 illustrated in FIG. 3 and its explanation is omitted.

A base station 300 shown in FIG. 7 is configured to have a transmission distance detector 301 that is connected to the slot interval controller 107 in addition to the configuration components of base station 100 shown in FIG. 3.

The transmission distance detector 301 measures delay time of transmit/receive signal to/from the mobile station 110, and detects a distance between the base station 300 and the mobile station 110 from measured time. The slot interval controller 107 varies the length of guard time 131 in accordance with the detected distance. If the distance is near, the guard time 131 is reduced. Conversely, if the distance is far, the guard time 131 is increased.

In this way, according to this embodiment, the length of guard time 131 is varied in accordance with the distance from the mobile station 110. Accordingly, if the mobile station 110 is near to the base station 300, the guard time 131 may be reduced on the assumption that no collision occurs between the downlink slot 122 and the uplink slot 123 for the mobile station 110. Conversely, if the mobile station 110 is far from the base station 300, the guard time 131 may be increased on the assumption that no collision occurs between the downlink slot 122 and the uplink slot 123 for the mobile station 110. In other words, the base station 300 can expand the communication zone as using the frame efficiently in accordance with the distance from the mobile station 110.

### (Embodiment 4)

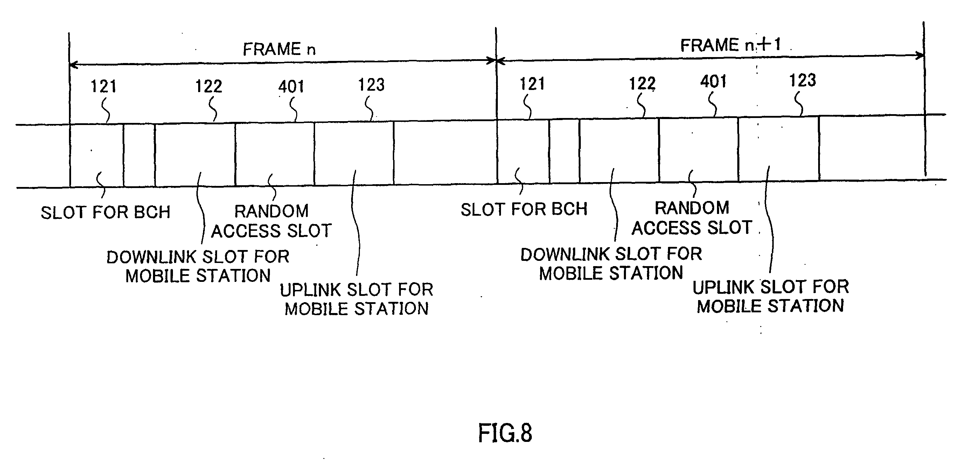

FIG.8 is a frame configuration view showing the arrangement of downlink/uplink slots allocated to a mobile station by a base station in a mobile communication system that performs TDD data communication according to Embodiment 4 of the present invention. Additionally, the base station that carries out slot allocation to each frame as illustrated in FIG. 8 has the same configuration as that of the base station 100 shown in, for example, FIG. 3.

The slot interval controller 107 of base station 100 provides a random access slot 401, which is normally placed at an arbitrary position between both slots of the downlink slot 122 and the uplink slot 123 for the same mobile station and which is usable by an arbitrary mobile station as shown in FIG. 8.

In this way, according to this embodiment, the random access slot 401 functions as the aforementioned guard time 131, so that the same effect as that of the case when the guard time allocation is carried out. Moreover, since the random access slot 401 is used as guard time 131, the frame signal can be efficiently used.

Additionally, as a modification of this embodiment, in the case where the guard time 131 is provided between both slots of the downlink slot 122 and the uplink slot 123 for the same mobile station, it is possible to carry out control that reduces the area of random access slot 401 by an area corresponding to the guard time 131. In this case, since the area of random access slot 401 is reduced by the area corresponding to the guard time 131, processing loads on the base station 100 can be reduced correspondingly.

This application is based on the Japanese Patent Application No.2000-299077 filed on September 29, 2000, entire content of which is expressly incorporated by reference herein.

### Industrial Applicability

The present invention can be applied to a data communication apparatus mounted on the base station and terminal apparatuses (mobile station, etc.) in a mobile communication system using TDD and a data communication method.

## Claims

1. A data communication apparatus comprising:
allocating means for allocating both a downlink slot and an uplink slot to each terminal apparatus in accordance with downlink/uplink traffic loads in TDD communication; and
control means for controlling said allocating means such that a slot for other terminal apparatus can be allocated between both slots of the downlink slot and the uplink slot that are allocated to the same terminal apparatus in the same frame signal.

2. A data communication apparatus comprising:
allocating means for allocating both a downlink slot and an uplink slot to each terminal apparatus in accordance with downlink/uplink traffic loads in TDD communication; and
control means for controlling said allocating means such that guard time can be allocated between both slots of the downlink slot and the uplink slot that are allocated to the same terminal apparatus in the same frame signal.

3. The data communication apparatus according to claim 2, wherein said control means controls said allocating means such that guard time can be allocated between both slots of the downlink slot and the uplink slot that are allocated to the same terminal apparatus in the same frame signal, in the case where no other terminal apparatus exist.

4. The data communication apparatus according to claim 2, wherein the length of said guard time is a fixed value.

5. The data communication apparatus according to claim 2, further comprising determining means for determining whether or not information to be transmitted to said terminal apparatus is reflected in transmit information in the same frame signal at said terminal apparatus,
wherein said control means carries out no allocation of guard time when no information to be transmitted to said terminal apparatus is reflected in transmit information in the same frame signal at said terminal apparatus.

6. The data communication apparatus according to claim 2, further comprising detecting means for detecting a distance from said terminal apparatus,
wherein said control means varies the length of guard time in accordance with the distance detected by said detecting means.

7. A data communication apparatus comprising:
allocating means for allocating both a downlink slot and an uplink slot to each terminal apparatus in accordance with downlink/uplink traffic loads in TDD communication; and
control means for controlling said allocating means such that a random access slot, which is usable by an arbitrary terminal apparatus, can be allocated between both slots of the downlink slot and the uplink slot that are allocated to the same terminal apparatus in the same frame signal.

8. The data communication apparatus according to claim 7, wherein when guard time is provided between both slots of the downlink slot and the uplink slot that are allocated to the same terminal apparatus, said control means reduces the area of random access slot by an area corresponding to the guard time.

9. A base station apparatus comprising the data communication apparatus described in any one of claims 1 to 8.

10. A data communication method comprising the step of allocating a slot for other terminal apparatus between both slots of a downlink slot and an uplink slot that are allocated to the same terminal apparatus in the same frame signal when both the downlink slot and the uplink slot are allocated to each terminal apparatus in accordance with downlink/uplink traffic loads in TDD communication.

11. A data communication method comprising the step of allocating guard time between both slots of a downlink slot and an uplink slot that are allocated to the same terminal apparatus in the same frame signal when both the downlink slot and the uplink slot are allocated to each terminal apparatus in accordance with downlink/uplink traffic loads in TDD communication.

12. The data communication method according to claim 11, wherein the length of guard time is varied in accordance with a distance from the terminal apparatus.

13. A data communication method comprising the step of allocating a random access slot between both slots of a downlink slot and an uplink slot that are allocated to the same terminal apparatus in the same frame signal when both the downlink slot and the uplink slot are allocated to each terminal apparatus in accordance with downlink/uplink traffic loads in TDD communication.
